# EUROPÄISCHE PATENTANMELDUNG

(11) **EP 1 547 860 A2**
(43) Veröffentlichungstag der Anmeldung: **29.06.2005**
(21) Anmeldenummer: 04024086.3
(22) Anmeldetag: 08.10.2004
(51) Int. Cl.: B60P 3/36, B60P 3/38

(54) **Strassenfahrzeug wie ein Wohnwagen, Reisemobil oder dergleichen**

(30) Priorität: 23.12.2003 DE 20319970 U
(71) Anmelder: Tabbert Caravan GmbH, 36391 Sinntal-Mottgers (DE)
(72) Erfinder: Brandl, Hubert, 36041 Fulda (DE)
(74) Vertreter: KUHNEN & WACKER

(57) **Zusammenfassung**

Die Erfindung betrifft ein Straßenfahrzeug wie einen Wohnwagen (10), ein Reisemobil oder dgl., mit einem Wohnbereich, in dem u.a. eine Küche und ein in Fahrzeuglängsrichtung ausgerichtetes Bett (15) angeordnet ist. Es zeichnet sich dabei dadurch aus, daß die Küche als Winkelküche (16) ausgebildet ist, wobei diese zwei Schenkel (161, 164) aufweist, und wobei in einem Schenkel (161) ein Kocher (162) und im anderen Schenkel (164) eine Spüle (165) angeordnet ist. Ferner ist ein Schenkel (164) der Winkelküche (16) unmittelbar benachbart zu einem Fußende des Betts (15) angeordnet und überlappt dabei im Grundriß des Straßenfahrzeugs das Fußende teilweise, wobei der über das Fußende des Betts (15) ragende Abschnitt des Schenkels (164) zur Herstellung einer Bewegungsfreiheit für die Füße eines Benutzers in einem Abstand über der Bettoberkante vorliegt. Damit wird ein Straßenfahrzeug geschaffen, bei dem die Raumausnutzung optimiert ist und der Wohnraum im Erscheinungsbild weitläufiger, d.h. weniger begrenzt wirkt.

## Beschreibung

Die Erfindung betrifft ein Straßenfahrzeug wie einen Wohnwagen, ein Reisemobil oder dergleichen, mit einem Wohnbereich, in dem u.a. eine Sitzgruppe, ein Kleiderschrank, eine Sanitärzelle, eine Küche und ein in Fahrzeuglängsrichtung ausgerichtetes Bett angeordnet ist, wobei der Wohnbereich durch eine Seitentür von außen zugänglich ist.

Wohnwägen, Reisemobile oder dergleichen sind beliebte Freizeiteinrichtungen, die eine ungezwungene und freie Urlaubsgestaltung ermöglichen. Allerdings ist der nutzbare Wohnbereich in einem solchen Straßenfahrzeug begrenzt, wobei Kundenwünsche in der Regel darauf gerichtet sind, ein in seinen Außenabmessungen möglichst kompaktes Fahrzeug vorzufinden. Insbesondere ist es häufig gewünscht, daß die Gesamtlänge des Fahrzeugs gering ist. Weitere Kundenwünsche sind darauf gerichtet, daß vor allem die Schlaf- und Aufenthaltsmöglichkeiten im Wohnbereich bequem nutzbar sind.

Bei den kompaktesten Wohnwägen mit einer Länge von ca. 4,50 m hat sich daher eine Art Standardgrundriß auf dem Markt durchgesetzt, welcher von den meisten Anbietern realisiert wird. Dieser sieht an einer Stirnseite des Fahrzeugs eine Rundsitzgruppe vor, welche sehr beliebt ist, da sie einer vergleichsweise großen Anzahl an Personen ein komfortables Beisammensein ermöglicht. An der gegenüberliegenden Stirnseite sind ein in Fahrzeuglängsrichtung ausgerichtetes Bett und eine Sanitärzelle nebeneinander angeordnet, wobei sich an einer Längsseite des Wohnbereichs ein Femsehschrank und hieran anschließend eine Küche befinden, welche schließlich an die Rundsitzgruppe grenzt. An der anderen Längsseite des Wohnbereichs befindet sich in der Regel direkt am Ende der Rundsitzgruppe die Seitentür, an welcher sich ein Kleiderschrank anschließt. Zwischen diesem Kleiderschrank und der Sanitärzelle ist ferner noch üblicherweise ein Waschbecken mit großem Spiegel angeordnet.

Dieser Fahrzeuggrundriß erlaubt eine sehr gute Raumausnutzung, weshalb er beim Kunden sehr beliebt ist. Aber auch diese Aufteilung der Einrichtungselemente erweist sich bei genauerer Betrachtung als nicht optimal. So ist hier der Kleiderschrank unmittelbar neben der Seitentür angeordnet, weshalb eine eintretende Person auf einer Seite im Eingangsbereich eine raumhohe Wand vorfmdet. Hierdurch erscheint der Wohnraum bereits beim Eintreten als relativ eng, worunter das Komfortempfinden des Benutzers leidet. Da der zudem versetzt hierzu auf der anderen Längsseite des Wohnbereichs angeordnete Fernsehschrank ebenfalls eine im Wesentlichen raumhohe Unterteilung im Wohnbereich herstellt, ergibt sich für eine auf der Rundsitzgruppe befindliche Person ein Blick in einen schmalen Kanal, was das Raumgefühl im Wohnbereich weiter beeinträchtigt.

Dem könnte grundsätzlich dadurch abgeholfen werden, daß anstelle des Kleiderschranks nur ein in etwa halbhohes Einrichtungsstück verwendet wird. Einer solchen Lösung steht jedoch entgegen, daß dann erheblicher Stauraum verloren gehen würde. Andererseits ist auch eine bloße Umgruppierung der bestehenden Einrichtungsgegenstände nicht hilfreich, da die Position der Rundsitzgruppe und des Betts entsprechend dem ausdrücklichen Kundenwunsch nicht verändert werden sollte und daher lediglich noch die Möglichkeit bestünde, die Küche anders anzuordnen. Diese erfordert jedoch einen gewissen Mindestbauraum, da hier herkömmlicherweise ein Kocher und eine Spüle nebeneinander angeordnet werden. In der Praxis entspricht die Länge der Küche in etwa der Breite des Kleiderschranks zusammen mit der Breite der Außentür. Ein bloßer Austausch des Kleiderschranks mit der Küche ist daher nicht möglich, wie Überlegungen im Rahmen der Erfindung gezeigt haben.

Dieses Problem besteht insbesondere bei den besonders kurzen Wohnwägen, wobei jedoch auch andere Varianten wie beispielsweise ein Wohnwagen mit einer weiteren Bettanordnung wie einem Etagenbett für Kinder analogen Gestaltungsgrundsätzen unterliegen und auch hier kaum Möglichkeiten für eine andere Aufteilung der Einrichtungsgegenstände im Grundriß gesehen werden, als sie bislang allgemein üblich sind. Bei diesen Bauweisen wird die Rundsitzgruppe üblicherweise aufgegeben und die Sitzgruppe nicht an einer Stirnseite des Wohnbereichs, sondern an einer Längsseite positioniert, wobei dann das Etagenbett an der Stirnseite zu liegen kommt. Auch in anderen Grundrissen für Wohnwägen, Reisemobile oder dergleichen sind entsprechende Probleme gegeben.

Der vorliegenden Erfindung liegt daher die Aufgabe zugrunde, ein Straßenfahrzeug wie einen Wohnwagen, ein Reisemobil oder dergleichen gemäß dem Oberbegriff des Anspruchs 1 derart weiterzubilden, daß die Raumausnutzung optimiert ist und der Wohnraum im Erscheinungsbild weitläufiger, d.h. weniger begrenzt wirkt.

Diese Aufgabe wird durch ein Straßenfahrzeug mit den Merkmalen des Anspruchs 1 gelöst. Dieses zeichnet sich insbesondere dadurch aus, daß die Küche als Winkelküche ausgebildet ist, wobei die Winkelküche zwei Schenkel aufweist, und wobei in einem Schenkel ein Kocher und im anderen Schenkel eine Spüle angeordnet ist, und daß ein Schenkel der Winkelküche unmittelbar benachbart zu einem Fußende des Betts angeordnet ist und dabei im Grundriß des Straßenfahrzeugs das Fußende teilweise überlappt, wobei der über das Fußende des Betts ragende Abschnitt des Schenkels zur Herstellung einer Bewegungsfreiheit für die Füße eines Benutzers in einem Abstand über der Bettoberkante vorliegt.

Somit ist es erfmdungsgemäß erstmals vorgesehen, eine Art Verschachtelung von Einrichtungselementen und hier insbesondere der Küche und des Betts auszuführen. Hierdurch erschließt sich ein zusätzlicher Stauraum im Straßenfahrzeug, wodurch eine optimierte Raumausnutzung möglich ist.

Im Rahmen der Erfindung wurde dabei erkannt, daß gerade im Fußbereich des Betts ein vorbestimmter, klar definierbarer Freiraum ausreicht, um die nötige Fußfreiheit zu ermöglichen. Zudem wurde erkannt, daß sich die Elemente der Küche besonders gut eignen, um diesen Freiraum zu begrenzen, ohne dabei hinsichtlich der Funktionalität Beschränkungen zu unterliegen. Die gezielte Ausgestaltung der Küche als Winkelküche und die Zuordnung eines Schenkels der Winkelküche zu dem Fußende des Betts unter Wahrung eines vorbestimmten Abstands an der Unterseite des das Bett überragenden Abschnitts dieses Schenkels zur Bettoberkante erlauben es, erheblichen zusätzlichen Stauraum im Wohnwagen zu gewinnen.

Dabei war man gerade im Bereich des als dauerhafte Einrichtung vorliegenden Betts bisher davon ausgegangen, daß der umliegende Bereich nicht unmittelbar über die Bettfläche ragen dürfte, um den Nutzungskomfort nicht zu beeinträchtigen. Im Hinblick auf das Bett ist auch zu berücksichtigen, daß die Bettoberkante eine gewisse Höhe über dem Wohnraumboden aufweisen muß, damit einerseits ein gutes Ein- und Aussteigen aus dem Bett möglich ist, und andererseits der Raum unter dem Bett in herkömmlicher Weise als zusätzlicher Stauraum genutzt werden kann. Dieser Stauraum ist dabei häufig auch von der Außenseite des Fahrzeugs zugänglich. Diesen Gesichtspunkten wird durch die Erfindung Rechnung getragen und dabei dennoch eine verbesserte Raumausnutzung erreicht.

Dabei führt die Ausgestaltung der Küche als Winkelküche zu weiteren wesentlichen Vorteilen: so reduziert sich die Länge der Küche in Fahrzeuglängsrichtung hierdurch wesentlich, da der Kocher und die Spüle in einem jeweiligen Schenkel der Winkelküche integriert sind. Das in Fahrzeuglängsrichtung somit gewonnene Maß an Freiraum findet seinen Ursprung in dem am Fußende des Betts benachbart angeordneten Schenkel der Winkelküche, der in die Mitte des Wohnbereichs ragt. Dieser Schenkel wird dabei jedoch nicht als störend empfunden, da er nicht raumhoch ist und einen sowieso gewünschten Abschluß der Fußseite des Betts herstellt.

Damit ist es erfindungsgemäß erstmals möglich, beispielsweise bei einem kompakten Wohnwagen mit einer Länge von 4,5 m die Seitentür, die Küche und das Bett an einer Längsseite des Wohnbereichs vorzusehen, wobei dennoch ausreichend Platz für eine Rundsitzgruppe an einer Stirnseite gegeben ist. Dies führt zu dem weiteren Vorteil, daß somit neben der Seitentür ein nur halbhohes Einrichtungselement, nämlich die Küche, angeordnet werden kann, was sich vorteilhaft auf das Raumgefühl im Wohnwagen etc. auswirkt. Der Wohnbereich wirkt dadurch weitläufiger.

Darüber hinaus wird auf der gegenüberliegenden Längsseite des Wohnbereichs zusätzlicher Raum frei, da der dann dort anordbare Kleiderschrank eine geringere Breite aufweist, als die Küche im Stand der Technik. Dieser zusätzliche Freiraum kann in vorteilhafter Weise dazu genutzt werden, um zusätzliche Stauräume und/oder ein Einrichtungselement für einen Fernseher, einen Kühlschrank, eine Mikrowelle, einen Backofen oder dergleichen bereitzustellen. Insbesondere ist es hiermit auch möglich, einen größeren Kühlschrank im Wohnbereich eines Wohnwagens oder dergleichen anzuordnen, als dies bislang der Fall war. So kann erfmdungsgemäß auch z.B. ein Kühlschrank mit einem Fassungsvermögen von 135 Litern im Fahrzeug angeordnet werden, obwohl dieser eine größere Höhe aufweist, als die übliche Höhe von Arbeitsplatten an einer Küche, da der Kühlschrank getrennt von der Küche an der gegenüberliegenden Längsseite des Wohnbereichs positionierbar ist.

Gegenüber den meisten herkömmlichen Grundrissen von derartigen Wohnwägen etc. hat das erfmdungsgemäße Straßenfahrzeug auch den weiteren Vorteil, daß die Seitentür somit auf der gegenüber liegenden Längsseite des Wohnbereichs angeordnet werden kann, als zum Beispiel ein Waschbecken mit darüber angeordnetem Spiegel. Dieser Spiegel kann daher erfindungsgemäß bereits von der Seitentür her einsehbar sein, wodurch sich im Hinblick auf die optische Wirkung eine weitere Raumvergrößerung erzielen läßt. Der Nutzungskomfort für das erfindungsgemäße Straßenfahrzeug ist daher wesentlich größer als im Stand der Technik.

Hierbei sind zwar ferner auch Campingbusse auf dem Markt bekannt, welche gegenüber Wohnwägen eine noch kompaktere Ausgestaltungsweise aufweisen und dementsprechend mit einer reduzierten Einrichtung ausgestattet sind. In der Regel liegt bei diesen Campingbussen jedoch kein fest installiertes Bett im Wohnbereich vor, so daß Sitze, Bänke etc. bei Bedarf zu Betten umfunktioniert werden. Dabei ist es bei diesen Campingbussen unter anderem auch bekannt, entsprechende Betteinrichtungen so auszugestalten, daß sie nach dem Ausklappen in die Unterschränke von anderen Einrichtungsgegenständen reichen; diese Schlafgelegenheiten sind dann jedoch nur als Notbetten nutzbar, da sie weder eine geeignete Betthöhe noch genügend Freiraum für den Benutzer insbesondere in überbauten Bereichen bieten. Die Erfindung schafft dagegen eine Standardlösung für fest installierte, voll nutzbare Betten, wozu hierzu erstmals die Ausgestaltung einer Winkelküche genutzt wird.

Vorteilhafte Weiterbildungen des erfindungsgemäßen Straßenfahrzeugs sind Gegenstand der abhängigen Ansprüche.

So können auf den Oberseiten der Schenkel vorliegende Arbeitsplatten in einem unterschiedlichen Höhenniveau über dem Wohnbereichsboden vorliegen, wobei die Arbeitsplatte an dem dem Bett benachbarten Schenkel auf einem höheren Niveau liegt, als die Arbeitsplatte des anderen Schenkels. Eine solche Ausgestaltungsweise hat den Vorteil, daß die zur Herstellung des Abstands für die Bewegungsfreiheit der Füße des Benutzers hilfreiche Anhebung der Arbeitsplatte an der Küche nur in dem Bereich durchgeführt wird, wo sie tatsächlich erforderlich erscheint. Wenigstens ein Teilabschnitt der Arbeitsplatte kann daher auf der üblicherweise gegebenen Höhe vorliegen, so daß der übliche Nutzungskomfort auch für die erfindungsgemäße Winkelküche erzielbar ist. Die auf niedrigerem Höhenniveau vorliegende Arbeitsplatte beeinträchtigt dabei den Durchblick in andere Bereiche des Straßenfahrzeugs zudem weniger, so daß auch hierdurch ein verbessertes Raumgefühl und optisches Erscheinungsbild erzielbar ist.

Von weiterem Vorteil ist es, wenn in dem dem Bett benachbarten Schenkel die Spüle integriert ist. Dann kommt der Kocher an einer Längsseite des Wohnbereichs zu liegen, wodurch Dunst, Dämpfe, etc. nicht neben dem Bett anfallen. Ferner ist hierbei zu berücksichtigen, daß der erforderliche Bauraum durch gezielte Wahl der Beckentiefe der Spüle mit relativ geringem Aufwand bestimmbar ist. Der für die Bewegungsfreiheit der Füße des Benutzers erforderliche Abstand bzw. Freiraum über der Bettoberkante läßt sich so einstellen. Wenn dabei eine Spüle mit geringer Beckentiefe von z.B. weniger als 150 mm eingesetzt wird, kann die Raumausnutzung weiter optimiert werden. Auch hierdurch erhöht sich der Nutzungskomfort für das erfindungsgemäße Straßenfahrzeug weiter.

In praktischen Versuchen hat es sich als besonders geeignet erwiesen, wenn zwischen der Bettoberkante und der Unterseite des über das Bett ragenden Abschnitts des Schenkels ein Abstand von wenigstens 300 mm gegeben ist. Für Menschen mit durchschnittlichen Fußgrößen ist dabei ein Abstand von wenigstens 330 mm besonders vorteilhaft, wobei bei einem Abstand von mehr als 350 mm auch sehr große Menschen noch genügend Bewegungsfreiheit für die Füße vorfinden, so daß hiermit ein voller Nutzungskomfort erzielbar ist.

Die erfindungsgemäße Konfiguration läßt sich in besonders vorteilhafter Weise an einem Straßenfahrzeug realisieren, bei dem die Sitzgruppe eine Rundsitzgruppe ist, und an einer Stirnseite des Wohnbereichs vorliegt, und bei dem die Seitentür zwischen der Rundsitzgruppe und der Winkelküche angeordnet ist. Ein solches Straßenfahrzeug zeichnet sich durch eine besonders kompakte Anordnung der Einrichtungselemente aus. Daher ist selbst bei einer sehr geringen Fahrzeuglänge von 4,5 m bereits ein sehr hoher Nutzungskomfort erzielbar, der dem im Stand der Technik gegebenen deutlich übersteigt. Hierbei ist insbesondere zu berücksichtigen, daß damit zu beiden Seiten der Seitentür im Wohnraum nur in etwa halbhohe Einrichtungselemente vorliegen, so daß eine eintretende Person weite Teile des Wohnraums ungehindert überblicken kann.

In einer alternativen Ausgestaltungsweise ist es auch möglich, daß im Wohnbereich ferner eine weitere Bettanordnung, wie insbesondere ein Etagenbett für Kinder, angeordnet ist, wobei diese Bettanordnung an einer Stirnseite und die Sitzgruppe an einer Längsseite des Wohnbereichs vorliegen, und daß die Seitentür zwischen der Bettanordnung und einer zusätzlichen Sitzbank angeordnet ist, welche der Sitzgruppe gegenüberliegend an der anderen Längsseite des Wohnbereichs positioniert ist. Hierdurch erhöht sich der Nutzungskomfort für das Straßenfahrzeug weiter, da somit eine zusätzliche Sitzbank im Fahrzeug angeordnet werden kann. Gerade solche Wohnwägen, Reisemobile oder dergleichen leiden häufig unter dem Problem, daß die bestehende Sitzgruppe bereits durch wenige Personen beispielsweise einem Eltempaar und zwei Kinder vollständig belegt ist. Neuere Modelle sehen jedoch bereits auf Kundenwunsch ein Dreifachetagenbett für Kinder vor. Eine dieser Personenanzahl entsprechende Sitzmöglichkeit an der Sitzgruppe ist dagegen in herkömmlichen Straßenfahrzeugen nicht gegeben, während sie nun aufgrund der erfindungsgemäßen Anordnung der Winkelküche zu dem Bett und dem somit zusätzlich frei gewordenen Raum im Wohnbereich durch die zusätzliche Sitzbank gegeben ist. Zudem hat eine solche Anordnung den weiteren Vorteil, daß mehr Personen einen direkten Blick auf einen Fernseher richten können, da mehr Sitzmöglichkeiten zur Auswahl stehen.

Die Erfindung wird nachfolgend in Ausführungsbeispielen anhand der Figuren der Zeichnung näher erläutert. Es zeigt:
- Fig. 1: den Grundriß eines erfmdungsgemäßen Wohnwagens in einer ersten Ausführungsform;
- Fig. 2: den Grundriß eines erfmdungsgemäßen Wohnwagens in einer anderen Aus-führungsform; und
- Fig. 3: einen Höhenschnitt durch den Überlappungsbereich zwischen der Winkelküche und dem Bett.

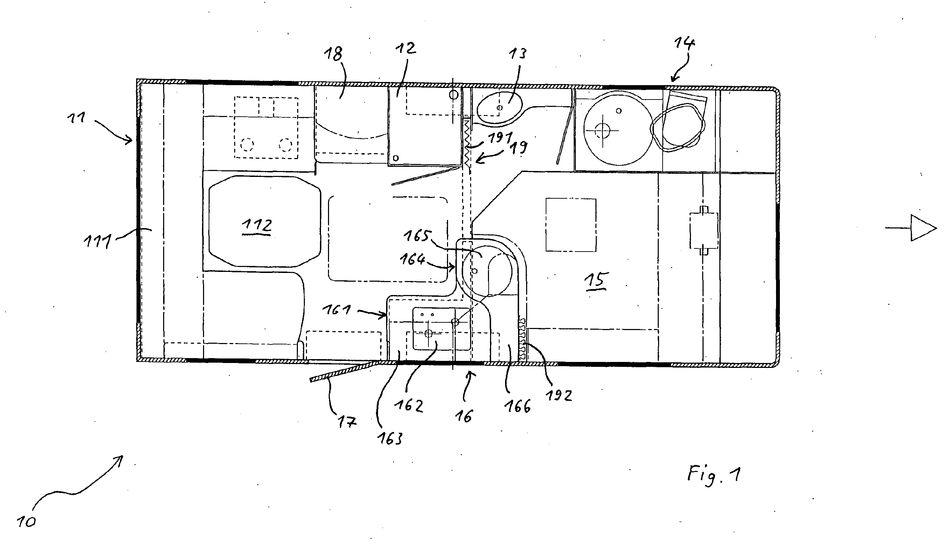

Gemäß der Darstellung in Fig. 1 weist ein Wohnwagen 10 einen Wohnbereich auf, in dem eine Rundsitzgruppe 11, ein Kleiderschrank 12, ein Waschbecken 13, eine Sanitärzelle 14, ein Bett 15 und eine Winkelküche 16 angeordnet sind. Die Rundsitzgruppe 11 ist dabei an einer Stirnseite des Wohnbereichs angeordnet und enthält eine Sitzbank 111, die einen Tisch 112 auf drei Seiten umgreift. Die Sanitärzelle 14 und das Bett 15 sind nebeneinander an der gegenüber liegenden Stirnseite des Wohnbereichs positioniert. Das Bett 15 ist hierbei als fest installiertes Doppelbett ausgebildet, welches in Fahrzeuglängsrichtung ausgerichtet ist. Im normalen Gebrauch wird das Bett 15 derart genutzt, daß beide hierauf liegende Personen mit dem Kopf im Bereich der Stirnseite liegen. An der Längsseite, an der die Sanitärzelle 14 angeordnet ist, schließt sich das Waschbecken 13 an, und an dieses schließlich der Kleiderschrank 12. Auf der gegenüber liegenden Längsseite des Wohnbereichs liegt zwischen dem Bett 15 und einer Seitentür 17 die Winkelküche 16. Der Seitentür 17 gegenüberliegend ist zudem ein Zusatzschrank 18 zwischen dem Kleiderschrank 12 und der Rundsitzgruppe 11 angeordnet.

Die Winkelküche 16 enthält einen ersten Schenkel, der an einer Längsseite des Wohnbereichs vorliegt und nachfolgend Wandschenkel 161 genannt wird. Wie aus Fig. 1 erkennbar ist, ist in diesem Schenkel ein Kocher 162 angeordnet, der in eine Arbeitsplatte 163 integriert ist. Der zweite Schenkel der Winkelküche 16 erstreckt sich von der Längsseitenwand in den Wohnraum hinein und wird nachfolgend Raumschenkel 164 genannt. In diesem ist eine Spüle 165 angeordnet, welche in einer Arbeitsplatte 166 integriert ist. Die Spüle 165 ist mit einer geeigneten Abdeckung versehen.

Wie aus Fig. 1 erkennbar ist, ist der Raumschenkel 164 parallel zum Fußende des Betts 15 ausgerichtet und übergreift dieses teilweise.

Im Wohnwagen 10 ist ferner ein Faltvorhang 19 angeordnet, der einen ersten Vorhangabschnitt 191 und einen zweiten Vorhangabschnitt 192 enthält. Der erste Vorhangabschnitt 191 ist dabei im Bereich zwischen dem Waschbecken 13 und dem Kleiderschrank 12 fixiert und kann in Richtung zur Winkelküche ausgezogen werden. Der zweite Vorhangabschnitt 192 ist an der Seitenwand fixiert, welche dem Bett 15 benachbart ist. Er erstreckt sich im ausgezogenen Zustand um den Raumschenkel 164 der Winkelküche 16 herum bis zum ersten Vorhangabschnitt 191. Wenn der Faltvorhang 19 ausgezogen ist, trennt er den Wohnbereich in zwei separate Teile, damit der Schlaf- und Sanitärbereich nicht einsehbar vom Aufenthaltsbereich mit der Rundsitzgruppe 11, der Küche 16 etc. vorliegt.

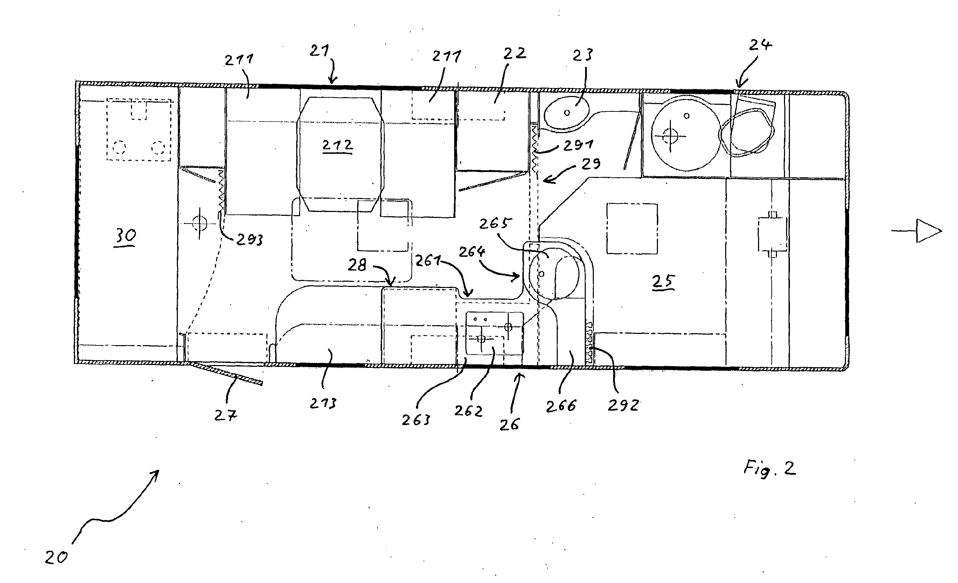

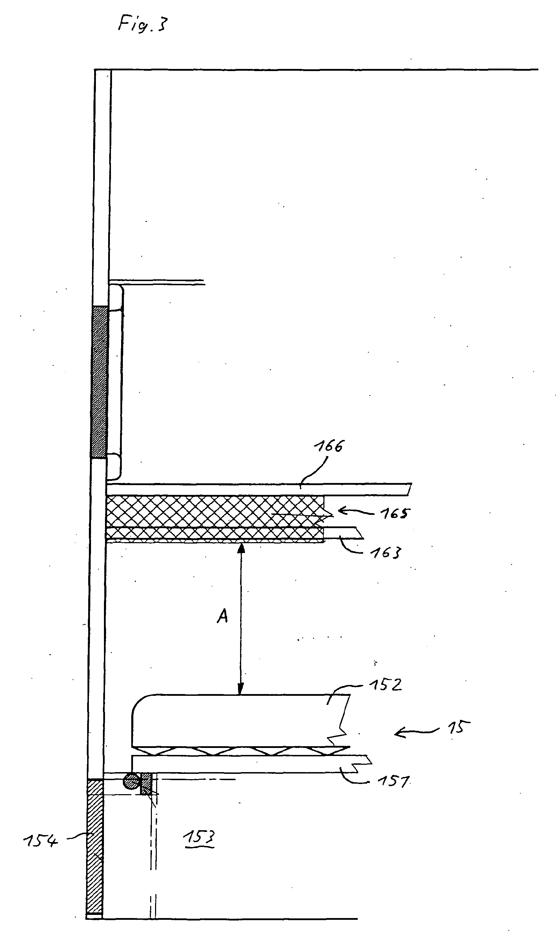

In Fig. 2 ist eine abgewandelte Ausführungsform dargestellt, gemäß der ein Wohnwagen 20 insbesondere zusätzlich weitere Betten aufweist, damit auch Kinder im Wohnbereich leben können. Der Wohnwagen 20 enthält eine Sitzgruppe 21, einen Kleiderschrank 22, ein Waschbecken 23, eine Sanitärzelle 24, ein Bett 25 und eine Winkelküche 26. Der Wohnwagen 20 ist dabei wiederum durch eine Seitentür 27 zugänglich. Darüber hinaus ist zwischen der Winkelküche 26 und der Sitzbank 213 ein Kühlschrank 28 angeordnet. Ferner weist der Wohnwagen 20 ebenfalls einen mehrteiligen Faltvorhang 29 auf. An einer Stirnseite des Wohnbereichs ist zudem ein Etagenbett 30 angeordnet. Das Etagenbett 30 befindet sich an der gegenüberliegenden Stirnseite wie das Bett 25.

In dieser abgewandelten Ausführungsform ist die Sitzgruppe 21 nicht als Rundsitzgruppe ausgestaltet, sondern weist zwei gegenüberliegende Sitzbänke 211 sowie einen dazwischen angeordneten Tisch 212 auf. Darüber hinaus enthält die Sitzgruppe 21 eine zusätzliche Sitzbank 213. Die zusätzliche Sitzbank 213 ist dabei an der den Sitzbänken 211 gegenüber liegenden Längsseitenwand des Wohnwagens 20 angeordnet.

Der Faltvorhang 29 enthält in analoger Weise zur ersten Ausführungsform einen ersten Vorhangabschnitt 291 und einen zweiten Vorhangabschnitt 292, wobei er zudem im Bereich des Etagenbetts 30 einen dritten Vorhangabschnitt 293 aufweist. Mittels der Vorhangabschnitte 291, 292 und 293 ist es jeweils möglich, die Schlafbereiche gegenüber dem Aufenthaltsbereich abzutrennen.

Die Winkelküche 26 ist im wesentlichen analog zur Winkelküche 16 gemäß der ersten Ausführungsform ausgebildet, d. h. sie weist einen Wandschenkel 261 auf, in dem ein Kocher 262 angeordnet ist, der in einer Arbeitsplatte 263 integriert ist. Die Winkelküche 26 enthält ferner einen Raumschenkel 264, in dem eine Spüle 265 angeordnet ist. Diese ist ebenfalls in einer Arbeitsplatte 266 eingebaut.

Wie aus Fig. 2 ferner hervorgeht, übergreift die Arbeitsplatte 263 des Wandschenkels 261 in der vorliegenden Ausführungsform auch den Kühlschrank 28, der benachbart zum Kocher 262 angeordnet ist.

Mit der in Fig. 2 gezeigten Konfiguration werden dabei im wesentlichen die gleichen Effekte erzielt, wie mit der in Fig. 1 gezeigten Ausführungsform.

Nachfolgend wird nun die spezielle Konfiguration im Überlappungsbereich des Raumschenkels 164 bzw. 264 mit dem Bett 15 bzw. 25 erläutert. In Fig. 3 ist ein Höhenschnitt durch diesen gezeigt. Diese Konfiguration ist in beiden Ausführungsformen gemäß der Darstellung in den Figuren 1 und 2 identisch, so daß Fig. 3 und die nun folgende Erläuterung hier zur Vereinfachung lediglich Bezug auf die Einrichtungselemente in der ersten Ausführungsform gemäß Fig. 1 nehmen.

Wie aus Fig. 3 erkennbar ist, weist das Bett 15 eine Auflage 151 auf, auf der eine Matratze 152 angeordnet ist. Unter der Auflage 151 erstreckt sich ferner ein Stauraum 153, der in diesem Beispiel ca. 335 mm hoch und in an sich herkömmlicher Weise sowohl von der Außenseite des Wohnwagens 10 durch eine Stauraumklappe 154 als auch durch ein Hochklappen der Auflage 151 von der Innenraumseite des Wohnwagens 10 aus zugänglich ist. Im Bereich über der Matratze 152 ist in Kreuzschraffur der Spülenkasten der Spüle 165 angedeutet, welche in der Arbeitsplatte 166 eingebaut ist. Ferner ist hier die Arbeitsplatte 163 des Wandschenkels gezeigt, in welchem der Kocher integriert ist. Wie aus dieser Darstellung erkennbar ist, sind die Arbeitsplatten 163 und 166 im Hinblick auf ihre Höhenlage über dem Boden des Wohnwagens 10 zueinander versetzt.

Wie aus Fig. 3 deutlich erkennbar ist, besteht ein Freiraum zwischen der Oberkante der Matratze 152 (Bettoberkante) und der Unterkante des Spülenkastens der Spüle 165. Dieser Freiraum ist so dimensioniert, daß ausreichend Bewegungsfreiheit für die Füße eines Benutzers des Betts 15 gegeben ist. Um dies zu erreichen, sind erfindungsgemäß jedoch eine Reihe von Schritten und Anpassungen erforderlich gewesen. So ist die Bettoberkante im erfindungsgemäßen Wohnwagen gegenüber herkömmlichen Bauweisen abgesenkt, wobei darauf geachtet wurde, daß nach wie vor eine ausreichende Höhe gegeben ist, damit die Benutzer komfortabel aus dem Bett aufstehen können. Zugleich ist das Bett 15 auch nur soweit abgesenkt, daß der Stauraum 153 weiterhin geeignet nutzbar ist und problemlos von der Außenseite durch die Stauraumklappe 154 beladen werden kann. Als eine typische Betthöhe hat sich hier ein Maß von ca. 515 mm über dem Boden des Wohnbereichs erwiesen. Abweichungen von diesem Maß sind jedoch je nach Gegebenheiten möglich.

Darüber hinaus ist die Spüle 165 in einer flachen Bauweise ausgebildet und weist in der vorliegenden Ausführungsform lediglich eine Gesamttiefe von 135 mm ab Oberkante Arbeitsplatte 166 auf. Da die Arbeitsplatte 166 am Raumschenkel 164 zudem im vorliegenden Beispiel ca. 100 mm höher liegt als die Arbeitsplatte 163 des Wandschenkels 161, ergibt sich so ein Abstand A zwischen der Bettoberkante und der Unterkante des Spüle 165 von ca. 350 mm, wobei die Arbeitsplatte 166 in einer Höhenlage von 1000 mm über dem Boden des Wohnbereichs vorliegt.

Die Erfindung läßt neben den aufgezeigten Ausführungsformen weitere Gestaltungsansätze zu.

So kann der Abstand A zwischen der Oberkante des Betts 15 und der Unterkante der Spüle 165 auch ein geringeres Maß als die 350 mm betragen. Dann ist es möglich, eine tiefere Spüle 165 zu verwenden oder den Höhenversatz der Arbeitsplatten 163 und 166 zu reduzieren. Alternativ oder ergänzend ist es zudem auch möglich, die Bettoberkannte anzuheben, um so den Stauraum 153 zu vergrößern. Falls dies gewünscht ist, kann der Abstand A jedoch auch größer als 350 mm gewählt werden, um so einen größeren Bewegungsfreiraum in diesem Bereich zu erzielen.

In den aufgezeigten Ausführungsbeispielen ragt der Raumschenkel 164 in Draufsicht gesehen ca. 370 mm über das Fußende des Betts 15 auf das Bett hinein. Dieses Maß bestimmt sich im wesentlichen durch die Größe, d. h. hier den Durchmesser der verwendeten Spüle 165 sowie die gewünschte Tiefe der Arbeitsplatte 166. Entsprechend kann dieses Maß jedoch auch beliebig variiert werden.

Auch in der zweiten Ausführungsform gemäß Fig. 2 ist es möglich, anstelle eines herkömmlichen Kühlschranks 28 einen größeren Kühlschrank mit beispielsweise einem Fassungsvermögen von 135 Litern zu verwenden. Dieser wird dann die Arbeitsplatte 263 des Wandschenkels 261 in der Höhe überragen, so daß diese entsprechend nicht über den Kühlschrank geführt sein wird.

In einigen Ausführungsformen ist es auch denkbar, daß die Arbeitsplatten 163 und 166 in einer gemeinsamen Höhenlage zueinander vorliegen. Dies ist zum Beispiel dann der Fall, wenn ein geringerer Abstand A als 350 mm angenommen und/oder eine größere Arbeitsplattenhöhe von generell zum Beispiel einem Meter akzeptiert wird.

Ferner ist es auch möglich, daß die Spüle im Wandschenkel integriert ist und der Kocher am Raumschenkel angeordnet wird.

Wie aus den Figuren 1 und 2 erkennbar ist, läßt sich die erfindungsgemäß vorgenommene "Verschachtelung" der Winkelküche 16 mit dem Bett 15 an zahlreichen Grundrissen von Wohnwägen, Reisemobilen oder dergleichen realisieren, wobei die analogen Vorteile erreicht werden. So können einzelne Einrichtungselemente auch in anderer Weise im Wohnbereich aufgeteilt sein. Insbesondere ist es auch möglich, daß Grundrisse realisiert werden, welche gegenüber den in Fig. 1 und 2 gezeigten um die Fahrzeuglängsmittelachse oder um die Fahrzeugquermittelachse gespiegelt sind, d. h. bei denen die Seitentür 17 auf der linken Fahrzeugseite vorliegt anstelle auf der rechten Fahrzeugseite, oder bei denen die Seitentür 17 im vorderen Bereich anstelle im hinteren Bereich des Wohnraums vorliegt. Entsprechende Abwandlungen sind üblich und werden je nach Kundenwunsch geliefert.

## Patentansprüche

1. Straßenfahrzeug wie ein Wohnwagen (10; 20), ein Reisemobil oder dgl., mit einem Wohnbereich, in dem u.a. eine Sitzgruppe (11; 21), ein Kleiderschrank (12; 22), eine Sanitärzelle (14; 24), eine Küche und ein in Fahrzeuglängsrichtung ausgerichtetes Bett (15; 25) angeordnet ist, wobei der Wohnbereich durch eine Seitentür (17; 27) von außen zugänglich ist,
**dadurch gekennzeichnet,**
**daß** die Küche als Winkelküche (16; 26) ausgebildet ist, wobei die Winkelküche (16; 26) zwei Schenkel (161, 164; 261, 264) aufweist, und wobei in einem Schenkel (161; 261) ein Kocher (162; 262) und im anderen Schenkel (164; 264) eine Spüle (165; 265) angeordnet ist, und
**daß** ein Schenkel (164; 264) der Winkelküche (16; 26) unmittelbar benachbart zu einem Fußende des Betts (15; 25) angeordnet ist und dabei im Grundriß des Straßenfahrzeugs das Fußende teilweise überlappt, wobei der über das Fußende des Betts (15; 25) ragende Abschnitt des Schenkels (164; 264) zur Herstellung einer Bewegungsfreiheit für die Füße eines Benutzers in einem Abstand (A) über der Bettoberkante vorliegt.

2. Straßenfahrzeug nach Anspruch 1, **dadurch gekennzeichnet, daß** auf den Oberseiten der Schenkel (161, 164; 261, 264) vorliegende Arbeitsplatten (163, 166; 263,266) in einem unterschiedlichen Höhenniveau über dem Wohnbereichsboden vorliegen, wobei die Arbeitsplatte (166; 266) an dem dem Bett (15; 25) benachbarten Schenkel (164; 264) auf einem höheren Niveau liegt, als die Arbeitsplatte (163; 263) des anderen Schenkels (161; 261).

3. Straßenfahrzeug nach Anspruch 1 oder 2, **dadurch gekennzeichnet, daß** in dem dem Bett (15; 25) benachbarten Schenkel (164; 264) die Spüle (165; 265) integriert ist, wobei vorzugsweise eine Spüle mit geringer Beckentiefe eingesetzt wird.

4. Straßenfahrzeug nach einem der Ansprüche 1 bis 3, **dadurch gekennzeichnet, daß** zwischen der Bettoberkante und der Unterseite des über das Bett (15; 25) ragenden Abschnitts des Schenkels (164; 264) ein Abstand (A) von wenigstens 300 mm, insbesondere von wenigstens 330 mm und vorzugsweise von wenigstens 350 mm vorliegt.

5. Straßenfahrzeug nach einem der Ansprüche 1 bis 4, **dadurch gekennzeichnet, daß** die Sitzgruppe (11) eine Rundsitzgruppe ist und an einer Stirnseite des Wohnbereichs vorliegt, und daß die Seitentür (17) zwischen der Rundsitzgruppe und der Winkelküche (16) angeordnet ist.

6. Straßenfahrzeug nach einem der Ansprüche 1 bis 4, **dadurch gekennzeichnet, daß** im Wohnbereich ferner eine weitere Bettanordnung, wie insbesondere ein Etagenbett (30) für Kinder, angeordnet ist, wobei diese Bettanordnung an einer Stirnseite und die Sitzgruppe (21) an einer Längsseite des Wohnbereichs vorliegen, und daß die Seitentür (27) zwischen der Bettanordnung und einer zusätzlichen Sitzbank (213) angeordnet ist, welche der Sitzgruppe (21) gegenüberliegend an der anderen Längsseite des Wohnbereichs positioniert ist.
